# EUROPEAN PATENT APPLICATION

(11) **EP 3 488 694 A1**
(43) Date of publication of application: **29.05.2019**
(21) Application number: 17464013.6
(22) Date of filing: 23.11.2017
(51) Int. Cl.: A01N 25/00, A01N 31/06

(54) **COMPOSITION BASED ON COLLAGEN HYDROLYSATE AND METHOD OF OBTAINING THEREOF FOR COATING LEGUMINOUS PLANT SEEDS**

(30) Priority: 22.11.2017 RO 201700967
(71) Applicant: Institutul National de Cercetare-Dezvoltare Pentru Textile si Pielarie (INCDTP) Sucursala Institul de Cercetare Pielarie Incaltaminte (ICPI), 031215 Bucuresti (RO)
(72) Inventor: Gaidau, Carmen Cornelia, Bucuresti (RO); Niculescu, Mihaela Doina, Bucuresti (RO); Epure, Doru-Gabriel, Judetul Olt (RO); Grzesiak, Edyta, 94-024 Lodz (PL); Gendaszewska, Dorota, 91-008 Lodz (PL); Lawinska, Katarzyna, 95-070 Rabien AB (PL); Lason-Rydel, Magdalena, 95-30 Rzgow (PL); Shalbuev, Dmitry, 670013 , Republic of Buryatia Ulan-Ude (RU)

(57) **Abstract**

The invention relates to a composition based on dolomite or limestone and collagen hydrolysate and to its application in encapsulating legume seeds in order to obtain full spherical and durable coatings that stimulate germination, increase biomass and resistance of plants to drought. For this purpose, for coating 1 kg of legume seeds, 150-400 g dolomite or limestone and 9-34 g collagen hydrolysate are mixed in a disc-type granulator, at an angle of 45° and a rate of 20 RPM. The method of extraction collagen hydrolysate allows for obtaining a product with 30% dry substance, molecular weight of 16000 Da, binding properties for encapsulation composition and biostimulating for legume seeds and seedlings and consists in alkaline hydrolysis with 10% calcium oxide, decanting, filtration, enzymatic hydrolysis with 0.4-1% Alcalase 2.5L, followed by advanced refining by decanting, vacuum concentration at 70°C, decanting and filtration.

## Description

The invention relates to a composition for coating leguminous plant seeds (pea, chickpea, beans etc.), containing collagen hydrolysate, with the effect of stimulating germination and increasing resistance to various climatic (drought) and soil conditions, and to the method of obtaining thereof.

Compositions and methods based on "denatured" gelatin are known (US 20140087942 A1) for the stimulation of plant growth. In this patent, denatured gelatin is used to coat salad, bell pepper, corn seeds or plant embryos, in pelletizing compositions with pesticide mixtures, growth hormones or other ingredients commonly used in seed treatment. Denatured gelatin is both a binding material for the other ingredients and an agent for moisture propagation and a growth stimulant for germs and embryos.

The use of gelatin or other additives such as guar gum and polyethylene oxide are known for solidification of mixtures of root fertilizers in order to achieve long-term nutritional effects **[**US 3105754 A**].** Innovative agriculture systems are also proposed that make use of containers (capsules) made from biodegradable non-adhering materials (gelatin, cellulose, polymers) that embed fertilizers or other ingredients and plant seeds and that enable reduction of labour for successive agricultural treatments, pollution and production loss [WO20151487 A1].

Foliar fertilizer obtaining processes and methods of application are also known [**a 2011 00446**] containing 12 g/L collagen hydrolysate and applied in a concentration of 250...1500 l/ha. Other applications prompt the development of formulations containing collagen hydrolysate in concentrations of 20-40 g/L for biostimulation, nutrition and foliar protection of horticultural plants [RO 123026 B1**]** or the use of collagen hydrolysates with molecular weights of 4000-6000 Daltons for the treatment of wheat seeds [EPO 3170393].

The problem that the invention solves refers to the development of coating compositions that ensure increased production of legumes through the presence of collagen hydrolysate with biding properties, free amino acid and oligopeptide content, with biostimulating functions for legume seed germination.

The advantages of the invention are:
- collagen hydrolysate is a biostimulating additive for legume seeds;
- collagen hydrolysate is an additive with binding properties for coating compositions by pelletizing;
- pelletizing compositions containing collagen hydrolysate ensure complete, closed, spherical coatings of legume seeds due to its binding properties;
- encapsulation compositions are not adherent and seeds do not form agglomerates;
- pelletizing compositions contain amino acids (according to chromatography analyses), they are not destroyed by pelletizing and have bioactive properties;
- collagen-containing coatings are stable over time, and have a specific solid substance and moisture content;
- the collagen hydrolysate in the pelletizing composition for legume seeds (e.g. pea seeds) stimulates and improves the growth of seedlings in various climatic conditions. In addition, collagen hydrolysate increases the resistance of legumes to drought;
- collagen hydrolysate can be used as inner layer in the pelletizing composition with the addition of protective substances (e.g. fungicides) and mineral or organic additives that stimulate legume seed germination (e.g. peas);
- collagen hydrolysate-containing coatings quickly decompose in the soil, releasing nutrients and stimulates seed growth and germination;
- collagen hydrolysate is a good binder for pelletizing compositions of legume seeds of varying forms and sizes.

Two examples of obtaining collagen hydrolysates and pelletizing composition containing collagen hydrolysate for legume seed coating are shown below. Testing collagen hydrolysates in the treatment of legume seeds has shown an increase in biomass in the case of soy beans and peas, early breeding in the case of peas, soy and broad beans (which indicates increased resistance to drought), stimulation of germination in the case of collagen hydrolysate and fungicide mixtures for chickpea, beans and pea seeds, compared to untreated seeds. Experiments on germination and size of pea and chickpea seedlings coated with collagen hydrolysate-containing composites have shown biostimulating effects and increased adaptability of plants in drought conditions due to the presence of collagen hydrolysate, compared to untreated seeds.
**Example 1:** tanned leather by-products, with sizes ranging from 0.2 to 0.5 cm, with 58% dry substance composition, 6% ash, 16% total nitrogen, 4.6% trivalent chromium oxide and pH of 3.5, are immersed in a closed, thermally insulated, reflux reaction vessel, equipped with mechanical stirrer and automated temperature control, with 400% water at the temperature of 80°C. After 30 minute homogenisation, 10% calcium oxide is added and stirred for 3 hours. The resulting reaction mass is decanted and qualitatively filtered using 0.45 µm filter paper, operations that ensure advanced elimination of trivalent chromium oxide. The resulting alkaline collagen hydrolysate is then placed in the same reaction vessel where it is treated with 0.5-1% of 1:10 dilute sulfuric acid, for 10 minutes, until reaching a pH of 9. The temperature is raised to 65°C under continuous stirring when 0.4-1 % Alcalase 2.4L is added and enzymatic hydrolysis is continued for 3 hours. Heating continues up to 90°C, for 10 minutes to stop enzymatic hydrolysis. The reaction mass is decanted and concentrated by evaporation under vacuum, at 70°C. The resulting product is decanted and filtered under vacuum. The main characteristics of the resulting collagen hydrolysates are: 30% dry substance; 5% ash; 16% total nitrogen; chromium oxide - undetectable; pH=8; molecular weight - 16000 Da; and free amino acid content (5% reported to protein substance). The collagen hydrolysate was tested in laboratory and in the field in pea, chickpea, broad beans and soy crops, registering increased germination and biomass, and reduced breeding time, compared to untreated seeds.
**Example 2:** the coating composition was developed using a disc-type granulator of 0.5 m diameter and 0.1 m height of dish, with 20 RPM and an angle of 45°. Using a hydraulic nozzle, over 1 kg of pea seeds were sprayed with 9-34 g collagen hydrolysate with the characteristics presented in **Example 1.** Then 150-400 g dolomite or limestone were added. Pea seeds were coated with a full, uniform, non-brittle and stable coating composition containing collagen hydrolysate (tested by amino acid analysis by chromatography). Coated pea seeds are perfectly round, the coating layer is resistant, does not break and does not absorb moisture over time. Seeds coated with higher amounts of collagen hydrolysate have led to taller seedlings and better resistance to climatic change.

### References:

1. US 20140087942 A1**, Promotion of plant growth using collagen based gelatin**
2. US 3105754 A**, Retarding the solubility of nitrogen containing fertilizers**
3. WO2015148787 A1**, Agricultural systems and methods**
4. **a** 2011 00446**, Fertilizant cu hidrolizate proteice cu aplicare extraradiculara, procedeu de obtinere si metoda de aplicare (Extra-root fertilizer with protein hydrolysates, process of preparation and method of application)**
5. RO 123026 B1**, Procedeu de preparare a aditivilor proteici si compozitiei multifunctionale pentru nutritia, stimularea cresterii si protectiei plantelor (Method for protein additives processing and multifunctional composition for nutrition, growth stimulation and plant protection)**
6. **EPO** 3170393**, Collagen polydispersions for the treatment of cereal seeds and process thereof.**

## Claims

1. Collagen hydrolysate for the treatment of legume seeds **characterized by the fact that** it presents o concentration of 30% dry substance, 16% total nitrogen, molecular weight of 16000 Da, free amino acid content, binding properties and biostimulating for the germination, biomass growth and resistance to drought of leguminous plants.

2. Process of obtaining collagen hydrolysates **characterized by the fact that** for the advanced separation and refinement of protein components from tanned leather by-products, they are subjected to alkaline hydrolysis at 80°C for 3 hours with 10% calcium oxide, decanted and filtered through porous media with the size of 0.45 µm, then subjected to enzymatic hydrolysis at 65°C with 0.4-1% Alcalase 2.4L for 3 hours followed by decanting, vacuum concentration at 70°C, final decanting and filtration.

3. Coating composition for legume seeds **characterized by the fact that** it represents a mixture of 150-400 g dolomite or limestone and 9-34 g collagen hydrolysate administered for 1 kg legume seeds, in a disc-type granulator, at an angle of 45° and a rate of 20 RPM.

## Amended claims

### Amended claims in accordance with Rule 137(2) EPC.

1. Collagen hydrolysate for the treatment of legume seeds **characterized by the fact that** it presents a concentration of 30% dry substance, 16% total nitrogen, molecular weight of 16000 Da, free amino acid content, binding properties and biostimulating for the germination, biomass growth and resistance to drought of leguminous plants.

2. Process of obtaining collagen hydrolysates **characterized by the fact that** for the advanced separation and refinement of protein components from tanned leather by-products, they are subjected to alkaline hydrolysis at 80°C for 3 hours with 10% calcium oxide, decanted and filtered through porous media with the size of 0.45 µm, then subjected to enzymatic hydrolysis at 65°C with 0.4-1% Alcalase® 2.4L for 3 hours followed by decanting, vacuum concentration at 70°C, final decanting and filtration.

3. Coating composition for legume seeds **characterized by the fact that** it represents a mixture of 150-400 g dolomite or limestone and 9-34 g collagen hydrolysate as presented in claim 1, with uniform and resistant coating properties and with biostimulant effect on plants growth and better adaptation to climate change.
